# EUROPEAN PATENT SPECIFICATION

(11) **EP 3 892 095 B1**
(45) Date of publication and mention of the grant of the patent: **25.12.2024**
(21) Application number: 20169005.4
(22) Date of filing: 09.04.2020
(51) Int. Cl.: A01M 7/00

(54) **A BOOM ARRANGEMENT FOR AN AGRICULTURAL SPRAYER, AGRICULTURAL SPRAYER, AND METHOD FOR OPERATING AN AGRICULTURAL SPRAYER**
AUSLEGERANORDNUNG FÜR EINE LANDWIRTSCHAFTLICHE SPRITZE, LANDWIRTSCHAFTLICHE SPRITZE UND VERFAHREN ZUM BETRIEB EINER LANDWIRTSCHAFTLICHEN SPRITZE
AGENCEMENT DE FLÈCHE POUR UN PULVÉRISATEUR AGRICOLE, PULVÉRISATEUR AGRICOLE ET PROCÉDÉ DE FONCTIONNEMENT D'UN PULVÉRISATEUR AGRICOLE

(43) Date of publication of application: 13.10.2021
(73) Proprietor: Kverneland Group Nieuw-Vennep B.V., 2153 LR Nieuw-Vennep (NL)
(72) Inventor: VAN DER KROGT, René, 2153 LR Nieuw-Vennep (NL); KONIJN, Theodorus Ludovicus Simon, 2153 LR Nieuw-Vennep (NL)
(74) Representative: Bittner, Thomas L.

(56) References cited:
- WO-A1-2019/105651
- CN-A- 108 739 766
- GB-A- 2 139 063
- US-A- 5 630 547

## Description

The present invention refers to a boom arrangement for an agricultural sprayer, an agricultural sprayer, and a method for operating an agricultural sprayer.

### Background

Agricultural sprayers are used for applying a spreading material. The agricultural sprayer is commonly provided with a boom arrangement comprising a boom extending transversely to a driving direction and carrying a plurality of dispensing elements such as nozzles which are provided along the boom. Outer sections of the boom may be relocated between a folded transport position and an unfolded or extended working position. Thereby, the agricultural sprayer is configured for transport and operation on the field.

Document CN 108 739 766 A discloses a plant protection machine as well as a spray boom device and an operation method of the spray boom device, wherein the plant protection machine comprises a plant protection machine main body, a storage device, and the spray boom device. Storage main bodies comprise a pair of storage elements. A pair of the storage main bodies are respectively disposed on two sides of the plant protection machine main body. Each of the storage elements is provided with a storage cavity. The spray boom device comprises a main spray boom component, a left spray boom component, and a right spray boom component. The left spray boom component and the right spray boom component are respectively operably disposed on the main spray boom component. The left spray boom component and the right spray boom component can be respectively disposed in the storage cavities of the pair of the storage elements, so that the spray boom device can be switched to a stored state, a half-deployed state or a fully-deployed state.

In document WO 2019 / 105 651 A1, a tractor-mounted agricultural sprayer is disclosed. The tractor-mounted agricultural sprayer comprises a main frame having, at a front side thereof, three-point linkage attachment means. A boom frame is suspended from the main frame by a suspension arm which is pivotally connected to the main frame at a position behind the boom frame.

Document GB 2 139 063 A refers to a device that is attachable to a tractor and is provided with a central storage container and pipelines disposed in a support structure which projects laterally beyond the storage container on both sides transversely to the direction of travel by a multiple of the width of the storage container. The support structure is divided on each side of the container into at least two sections which are movable relative to one another. The sections nearest to the storage container are arranged so as to be pivotable in each case about a horizontal axis extending in the direction of travel of the device. The outer sections of the support structure are arranged so as to be pivotable about axes which are upright in the operating position of the support structure, so that the sections project forwards from the sections in the conveying position of the support structure.

Document US 5 630 547 A discloses a sprayer boom assembly including a center boom, left inner and outer wing booms, and right inner and outer wing booms. A left wing hydraulic cylinder pivots the left inner and outer wing booms between a horizontal working position and a folded transport position. A right wing hydraulic cylinder pivots the right inner and outer wing booms between a horizontal working position and a folded transport position. The center boom is pivotally attached to an intermediate frame by a left leveling link and a right leveling link. A left sprayer boom lock assembly limits pivotal movement of the left and right leveling links in a first direction when the left wing hydraulic cylinder pivots the left inner wing from a horizontal working position. A right sprayer boom lock assembly limits pivotal movement of the left and right leveling links in a second direction when the right wing hydraulic cylinder pivots the right inner wing from a horizontal working position. Valves control the supply of liquid chemicals to the nozzles.

### Summary

It is an object to provide a boom arrangement for an agricultural sprayer, an agricultural sprayer, and a method for operating an agricultural sprayer which allow for improved safety.

For solving the problem, a boom arrangement for an agricultural sprayer according to the independent claim 1 is provided. Further, an agricultural sprayer and a method for operating an agricultural sprayer according to claim 13 and claim 14, respectively, is provided. Additional embodiments are the subject of dependent claims.

According to one aspect, a boom arrangement for an agricultural sprayer is provided, the boom arrangement comprising: a boom having a middle section provided with a boom frame and boom arms provided on opposite sides of the middle section and vertically foldable between an unfolded working position in which the boom arms are at least partially unfolded and a folded position; a plurality of dispensing elements arranged along the boom and configured to dispense a spraying material; a boom support assembly to which the middle section of the boom is connected, the boom support assembly being connectable to a support frame of an agricultural sprayer; and a boom arms operating and locking mechanism. The boom arms operating and locking mechanism is configured to provide the boom arms in a locked position in which the boom arms are locked; move the boom arms along a vertical line of movement between the locked position and an unlocked position in which the boom arms can be unfolded to the unfolded working position; and move the boom arms between the unlocked position and the unfolded working position; and a locking sensor device configured to detect, for the boom arms, the locked position, and provide sensor signals indicative of the boom arms being in the locked position. Further, the boom arrangement comprises a locking sensor device configured to detect, for the boom arms, the locked position, and provide sensor signals indicative of the boom arms being in the locked position.

According to a further aspect, an agricultural sprayer comprising the boom arrangement is provided.

Further, a method for operating an agricultural sprayer is provided. The agricultural sprayer is having: a boom having a middle section provided with a boom frame and boom arms provided on opposite sides of the middle section and vertically foldable between an unfolded working position in which the boom arms are at least partially unfolded and a folded position; a plurality of dispensing elements arranged along the boom and configured to dispense a spraying material; a boom support assembly to which the middle section of the boom is connected, the boom support assembly being connectable to a support frame of an agricultural sprayer; and a boom arms operating and locking mechanism configured to move the boom arms between the extended working position and the folded position, and to lock the boom arms in the folded position; and a locking sensor device. The method is comprising: providing the boom arms in a locked position in which the boom arms are locked; detecting, for the boom arms, the locked position by the locking sensor device; providing sensor signals indicative of the boom arms being in the locked position by the locking sensor device; moving the boom arms along a vertical line of movement between the locked position and an unlocked position in which the boom arms can be unfolded to the unfolded working position; and moving the boom arms between the unlocked position and the unfolded working position.

By means of the boom arms operating and locking mechanism the boom arms can be moved into a plurality of different positions selected from the following: unfolded working position, one or more folded positions, unlocked position, and locked position which may also be referred to as (folded) transport position. In the locked position the boom arms are safely secured or locked. Prior to movement from the folded position to the unfolded working position, the boom arms operating and locking mechanism will move the boom arms along the vertical line of movement from the locked position to the unlocked position. Such line of vertical movement also applies when the boom arms are moved from the unlocked position to the locked position. In both the unlocked position and the locked position, the boom arms are folded. Thus, the unlocked position and the locked position are contained in a plurality of folded positions.

In the locked position (folded transport position) the boom arms are prevented from unintended movement, i.e. safely stored. Specifically, it may be provided that the boom arms operating and locking mechanism prevents the boom arms from unintended movement in a driving direction of the agricultural sprayer. Alternatively or in addition, it may be provided that the boom arms operating and locking mechanism prevents the boom arms from unintended movement in a transverse direction with respect to the driving direction of the agricultural sprayer.

In the course of the movement along the vertical line from the locked position to the unlocked position the boom arms may be lifted. Similarly, the boom arms may be lowered in the course of the movement along the vertical line from the unlocked position to the locked position. Lifting and lowering may be applied by an actuator. The actuator can be implemented as one of a plunger cylinder, a piston cylinder, and a synchronous cylinder. If this cylinder is implemented as a telescopic cylinder, an even higher working position can be reached. The actuator could also be provided with a pneumatic cylinder or an electric actuator.

The actuator may be provided as part of the boom arms operating and locking mechanism. The actuator is provided for driving movement of the boom arms between the locked position and the unlocked position the vertical line of movement. The actuator may be applied for reaching a higher working position without exceeding the overall machine height which, for example, may be about 4m.

The boom arms may be folded from the unfolded working position to the unlocked (folded) position. Following, the boom arms may be moved from the unlocked (folded) position to the locked position.

By means of the locking sensor device it is detected whether the boom arms are actually in the locked position. If such locked position is detected, sensor signals indicative of the boom arms being in the locked position are provided by the locking sensor device. If the boom arms not in the locked position, but in one of the unlocked, some other folded position, and the unfolded working position, the locking sensor device may provide sensor signals indicative of the boom arms being not in the locked position.

The agricultural sprayer may be provided by an implement to be trailed by a tractor. Alternatively, the agricultural sprayer may be provided on a self-propelling machine. Accordingly, the boom arrangement is provided on either the implement or carried by the self-propelling machine.

The boom arms operating and locking mechanism may comprise: a guiding device having a guiding element extending in the vertical direction; and a counter guiding element assigned to the guiding element and configured to interact with the guiding element for guiding the boom arms for at least a partial movement of the movement along the vertical line between the locked position and the unlocked position. The locking sensor device may be provided with a first sensor element and a second sensor element on opposite sides of the guiding device for even more safely detecting the locked position of the boom arm.

The guiding element may comprise a guiding track extending in the vertical direction, wherein the counter guiding element is configured to interact with the guiding track for guiding the boom arms for at least the partial movement of the movement along the vertical line between the locked position and the unlocked position.

The guiding track may comprise a slit guiding extending in the vertical direction, wherein the counter guiding element is configured to move within the slit guiding for guiding the boom arms for at least the partial movement of the movement along the vertical line between the locked position and the unlocked position.

The guiding element may comprise a catching entrance section. The catching entrance section may be configured to support start or beginning of the interaction between the counter guiding element and the guiding element, thereby, supporting receiving the counter guiding element in the guiding element. The catching entrance section may be provided with a V-form.

The counter guiding element may be essentially positively formed with respect to the guiding element.

The counter guiding element may comprise a hook element configured to interact with the guiding element for guiding the boom arms for at least the partial movement of the movement along the vertical line between the locked position and the unlocked position.

The boom arms may be prevented from movement in a horizontal plane in the locked position.

The locking sensor device may comprise a proximity sensor. Other types of sensor devices may be applied: a proximity switch (physical contact), a touch sensor, a mechanical button being pressed in when boom is in locked position, an inductive proximity sensor, a visual sensor and / or a infrared sensor which use the emittance and reflection of light to detect an object.

The boom arrangement may further comprise a folding sensor device configured to detect sensor signals indicative of the boom arms being in one of the folded position and the unfolded working position. With respect to the folding sensor device, it may be configured to detect sensor signals indicative of a plurality of different unfolded positions of the boom arms. For example, a fully unfolded (extended) position and at least one partially unfolded position may be detected.

The folding sensor device may be implemented by one or more (separately located) sensor elements.

As an option, further sensor devices may be provided for detecting sensor signals indicative of other parameters related to operation of the boom arrangement. For example, with respect to the folding and unfolding of the boom arms, one or more angle sensors assigned to boom arms may be provided and configured to detect different (folding) positions or angles for the boom arms. The folding angles may be assigned to different unfolded / folded positions.

In response to sensor signals, movement of the boom (or boom arms or boom segments) can be either be allowed or prevented. For example, folding of the boom arm to the unlocked position (towards the locked or transport position) can be prevented when not all boom sections of the boom arm are folded before. This can be applied to prevent folding of extended boom sections to a vertical direction, resulting in the machine exceeding a maximum height, for example, a maximum height of about 4m. For the same reason, unfolding of boom sections may only be allowed when the sensor signals detected indicate that the corresponding boom arm is unfolded to the low position.

A warning signal can be given on an operation screen of the control unit, or the electronic functionality may be blocked by software control. Blocking may be implemented by blocking actuating or operating of one or more actuators provided boom folding / unfolding.

The boom support assembly may comprise a boom lifting device configured to lift and lower the boom in the vertical direction for positioning the boom in a plurality of positions with different height settings. The (present) position of the boom lifting device may be detected by using an angle sensor. Alternatively or in addition, this can be done using one or more proximity sensors and / or linear positioning sensors which may be provided in proximity to or integrated with a lifting actuator assigned to the boom lifting device or using a length-measuring sensor in or on the lifting actuator.

In an embodiment, the boom arrangement may be configured to apply or conduct a folding process for one or both of the boom arms, the process comprising: folding boom arm(s) to the folded position; detecting the folded position of the boom arm(s) by the folding sensor device; lifting the boom with the boom arm(s) in the folded position to a locking height position by the boom lifting device; and locking the (folded) boom arm(s) after the boom has been lifted to the locking height position. The locking comprises moving the boom arm(s) from the folded (unlocked) position to the locked position along the vertical line of movement. The locking may only be applied or allowed after sensor signals are received indicating both: (i) the boom arms are folded to the folded position, and (ii) the boom is lifted in the locking height position. Otherwise locking of the boom arm(s) may be prevented by the control device of the agricultural sprayer.

Sensor signals indicative of the boom being lifted may be provided by one or more proximity sensors and / or a length measuring device assigned to an actuator of the boom lifting device. If the sensor signals indicate that the boom is not (yet) in the locking height position locking of the boom arm(s) may be prevented from locking.

The boom lifting device may comprise a parallelogram mechanism. An angle sensor may be provided to measure a present position of the parallelogram in relation to the main frame or the boom support frame. The angle value detected by the angle sensor gives an indication of the boom lift height. If an angle value is too high (above some predetermined threshold value), the boom could exceed a threshold height, for example, a height of about 4m. In response to such finding, folding of the boom arms will be prevented.

If at least one boom arm is located in the locked position, lifting or actuating the boom lift (such as the parallelogram mechanism) may be prevented, in case a pre-set angle sensor value is reached for preventing exceeding the threshold height (maximum allowed height) for avoiding the risk of colliding with electricity or telephone lines.

The boom lifting device may be provided with a damping device configured to damp movement of the boom in operation of the agricultural sprayer. The damping device may be connected or assigned to the parallelogram mechanism. The damping device may be provided with a hydro-pneumatic damping device. An accumulator with a pre-load nitrogen pressure may be provided. This accumulator may be connected to either a bottom side or a piston rod side of at least one hydraulic lift cylinder. This accumulator may be separated from the cylinder by a (electronically operated) valve or there may be various accumulators with equal or different pre-load pressures or working configurations to accomplish different damping characteristics in different modes of operation. As an alternative or in addition, a mechanical damping device may be provided comprising, for example, a spring-damper combination with a leaf spring or a compression spring or a pull-type spring or even a torsion spring. Other alternatives include air-cushion damping or damping by means of rubber support blocks. It may be an aspect that the damping device is not affected by the mode of operation of the boom. Damping is provided for both the locked and the unlocked position of the boom arms. Also, for a spraying mode (unfolded boom arms) and the transport mode (folded boom arms) boom damping can be activated.

With respect to the agricultural sprayer and the method for operating the agricultural sprayer, the embodiments outlined above may be applied *mutatis mutandis.*

The method for operating the agricultural sprayer may further comprise dispensing the dispensing material through dispensing elements from the plurality of dispensing elements, the dispensing elements provided on the boom arm, while the agricultural sprayer is moving over a field and the boom arm is in the unfolded working position and the other boom arm provided on the opposite side of the boom frame is in the folded transport position.

A control software application running in a control device of the agricultural sprayer may be applied for implementing one or more of the different modes of operation. Sensor signals or data can be analysed by some control software application. In response to such analysing, operation of the boom arrangement may be controlled in dependence on the sensor signals. For example, the analysing may comprise checking whether the boom arm is locked in locked mode which is indicated by the sensor signals provided by the locking sensor device, and controlling the boom height during spraying operation using sensor signals indicative of boom locking and / or sensor signals indicative of a height position of the boom lifting device such as the parallelogram mechanism. Alternatively or in addition, the folding sequence may be controlled by the control device provided in combination with the boom arrangement.

For example, in a transport mode it may be prevented raising the boom lift device such as the parallelogram mechanism above a pre-set or predetermined height value (threshold) to avoid exceeding maximum transport height.

During folding / locking the boom arms, it may be prevented to fold the boom arms if one or more boom sections are in extended position. Folding the boom arms may also be prevented if the boom lift is in too high position. A warning signal can be outputted by the control device in response to receiving sensor signals passing a threshold value.

### Description of embodiments

Following, further embodiments are described by referring to figures. In the figures, show:
- Fig. 1: a schematic perspective representation of an agricultural sprayer trailed by a tractor, wherein boom arms of a boom provided with a plurality of dispensing elements are in a locked position;
- Fig. 2: a schematic perspective representation of the agricultural sprayer from Fig. 1, wherein the boom arms are in an unlocked (but folded) position;
- Fig. 3: a schematic perspective representation of the agricultural sprayer from Fig. 1, wherein the boom arms are in a partially unfolded position;
- Fig. 4: a schematic perspective representation of the agricultural sprayer from Fig. 1, wherein the boom arms are in a (fully) unfolded working position;
- Fig. 5: a schematic perspective representation of the agricultural sprayer from Fig. 1, wherein the boom arms are in a lifted working position;
- Fig. 6: a schematic perspective representation of the agricultural sprayer from Fig. 1, wherein a boom arm is in the folded position and an opposite boom arm is in the extended position;
- Fig. 7: a schematic perspective representation of elements of a boom arrangement of the agricultural sprayer from Fig. 1, wherein boom arms of the boom are in the locked position;
- Fig. 8: a schematic perspective representation of the elements of the boom arrangement from Fig. 7, wherein the boom arms are in an unlocked (but folded) position;
- Fig. 9: a schematic perspective representation of an arrangement with catching plate interacting with a hook for boom arm locking (locked position);
- Fig. 10: a schematic perspective representation of elements of the arrangement in Fig. 9;
- Fig. 11: a schematic representation of the agricultural sprayer from Fig. 3 in a side view;
- Fig. 12: a schematic representation of the agricultural sprayer from Fig. 4 in a side view; and
- Fig. 13: a schematic representation of the agricultural sprayer from Fig. 5 in a side view.

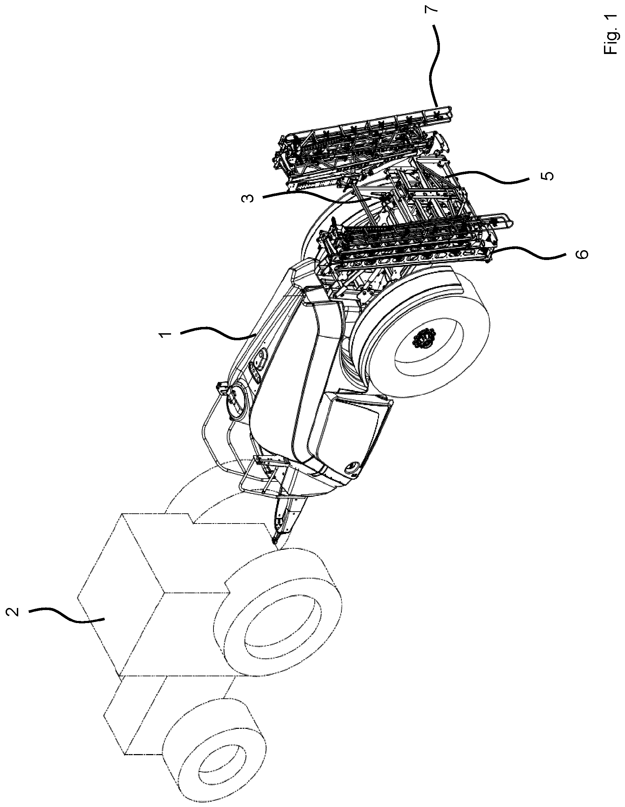

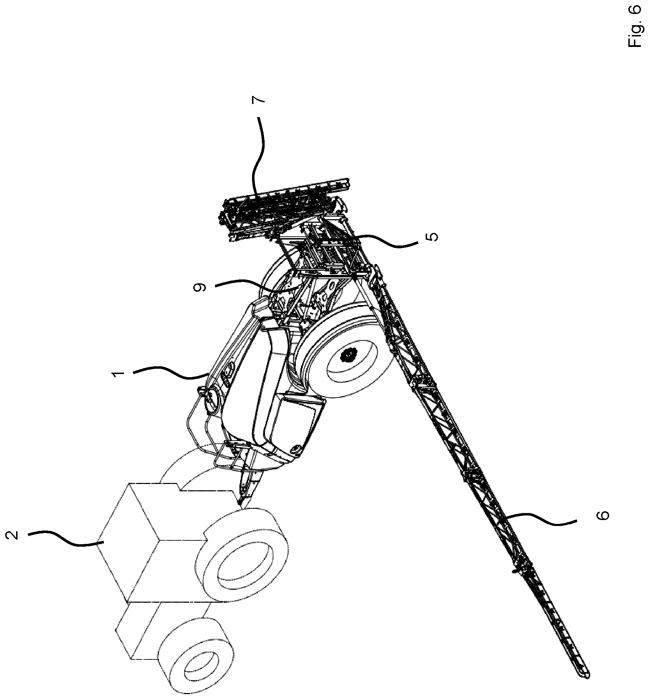

Referring to Fig. 1 to 6, an agricultural sprayer 1 provided as an implement trailed by a tractor 2 is shown. With respect to a boom arrangement 3 provided with a boom 4 having a middle section 5 and boom arms 6, 7 on opposite sides, different positions are depicted. Along the boom 4 a plurality of dispensing elements is provided, such as nozzles, the dispensing elements being configured for dispensing a material to the field.

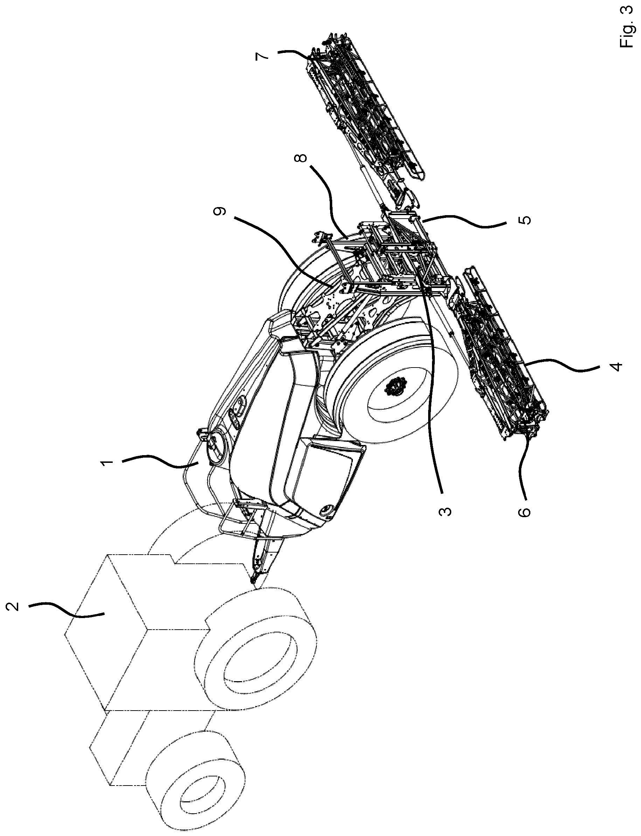

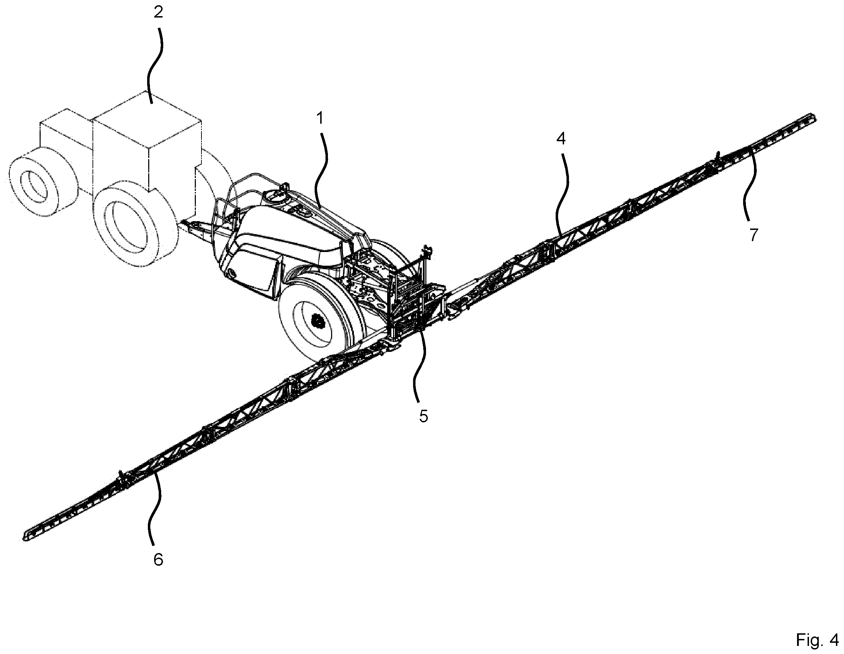

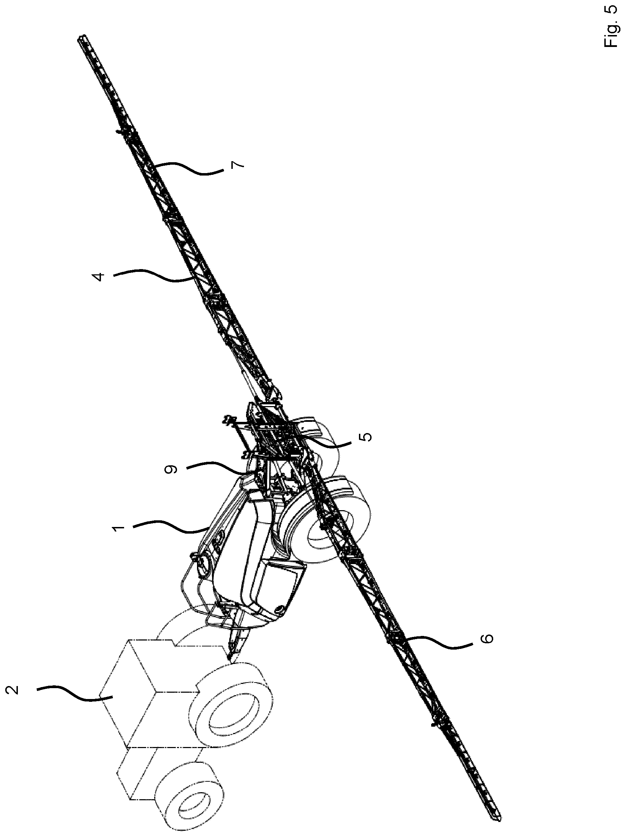

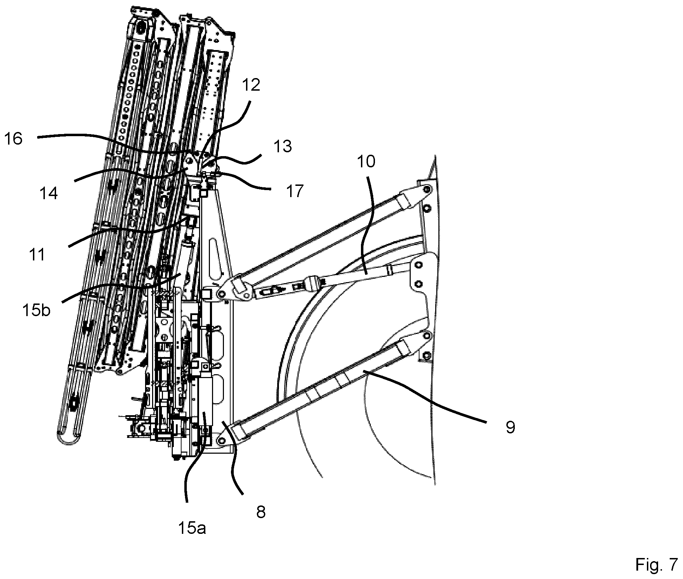

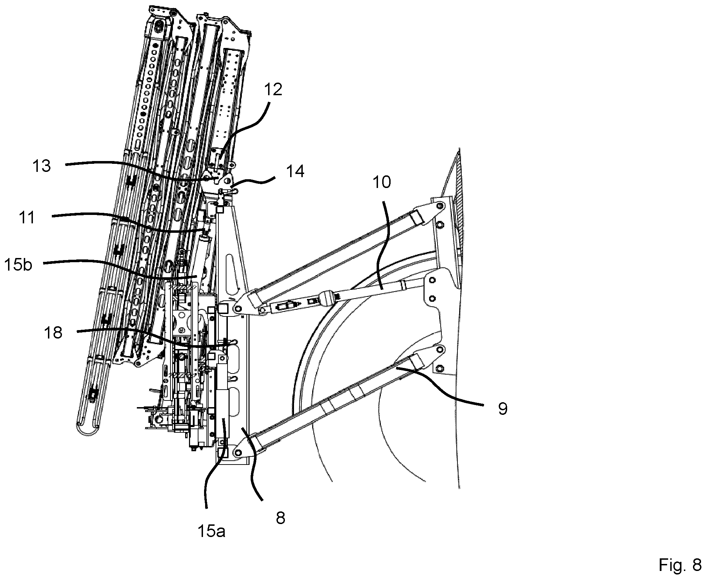

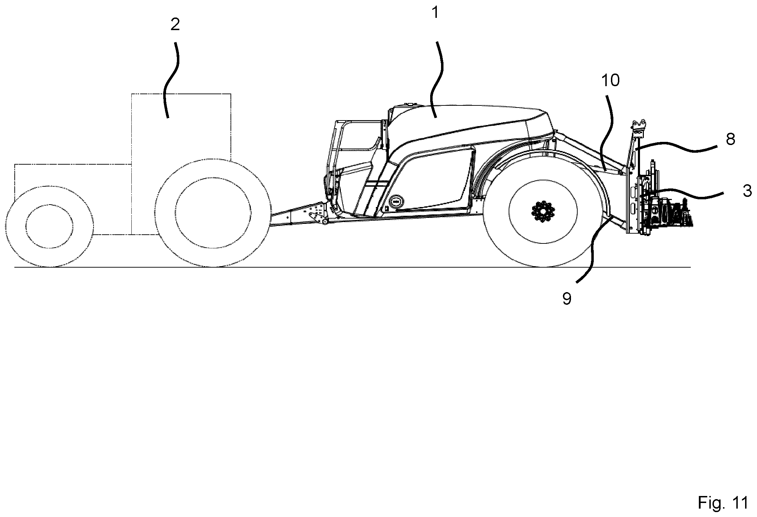

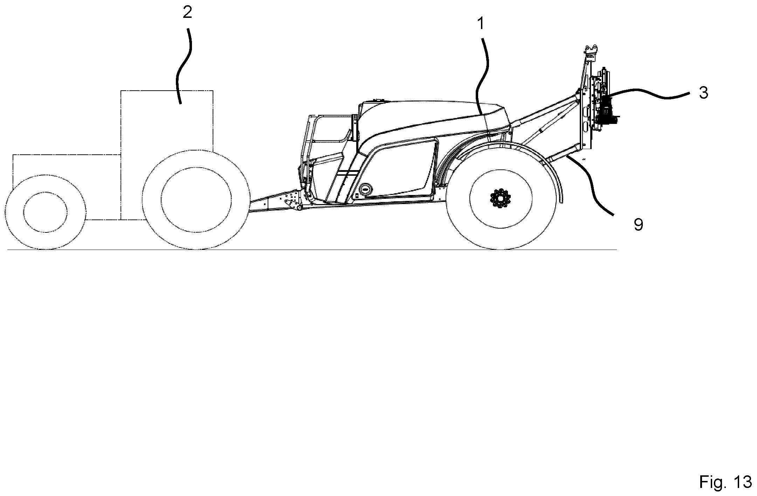

A boom frame 8 of the middle section 5 of the boom 4 is connected to a parallelogram mechanism 9 (see Fig. 7 and 8). The parallelogram cylinder 10 which may be provided as a hydraulic cylinder provides for actuating the parallelogram mechanism 9 for moving the boom arrangement 3 up and down. Thereby, the boom arrangement 3 can be lifted to a working position of specific height (see Fig. 5) and moved down (see Fig. 3 and 4). Reference is also made to Fig. 11 to 13.

Further, the parallelogram cylinder 10 provides for damping of movement of the boom 4 connected to or received on the parallelogram mechanism 9 in operation of the agricultural sprayer 1 on the field.

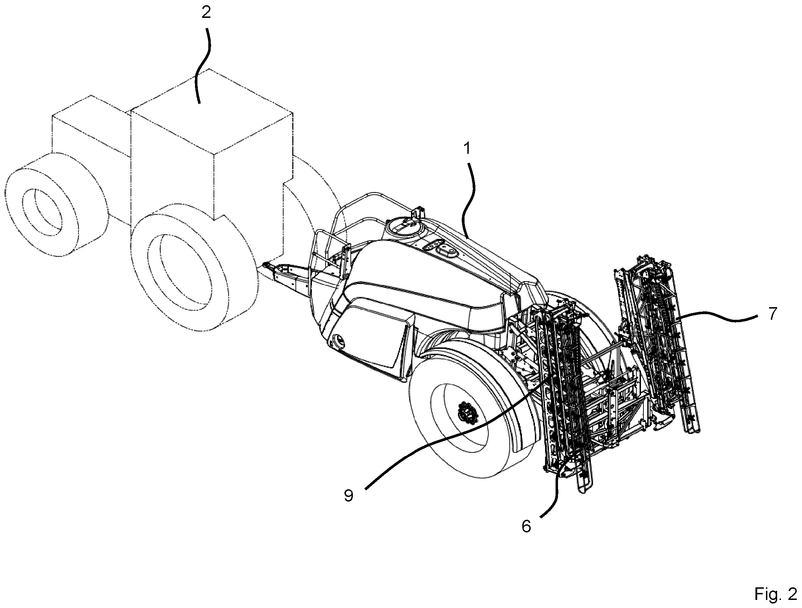

The boom arms 6, 7 are movable between a folded position (see Fig. 1 and 2) and unfolded working or extended position (see Fig. 3 and 4). According Fig. 4 and 5, boom arrangement 3 with the boom 4 is lifted from a lower position to a higher position which provides for a working height.

Prior to moving the boom arms 6, 7 to one of the unfolded positions, a boom arm operating and locking mechanism 11 is lifting the (folded) boom arms 6, 7 along a vertical line or direction of movement from a locked position (see Fig. 7) to an unlocked position (see Fig 8) in which the boom arms 6, 7 can be unfolded. Such vertical movement is provided by lifting der boom arms 6, 7.

Fig. 7 shows the locked position, while in Fig. 8 the unlocked position is depicted. In the locked position a hook 12 mounted to the boom arm 6, 7. The hook 12 providing for a counter guiding element is received in a slit 13 of a catching plate 14 providing for a guiding element. For lifting or moving the boom arms 6, 7 from such locked position to the unlocked position depicted in Fig. 8, the boom arm 6, 7 is driven by an actuator 15a of the boom arms operating and locking mechanism 11. The actuator 15a may be provided with a cylinder device.

Another actuator 15b which may also comprise a cylinder device is provided for folding the boom arm between the unfolded working position and the folded position. In addition, the actuator 15b may be configured to adjust some geometry of the boom arm to which it is assigned for following a contour of the field surface in the process of spraying on the field.

The catching plate 14 is provided with a catching entrance section 16 having a V-form.

Referring to Fig. 7 and 8, a locking sensor device 17 is provided for detecting sensor signals indicative of the boom arm 6, 7 being in the locked (folded transport) position depicted in Fig. 7.

Referring to Fig. 8, a further sensor device 18 is provided for detecting sensor signals indicating whether the boom arm 6, 7 is in a lifted or raised position. Further sensor devices may be provided. For example, one or more angle sensor devices may be located on the boom arrangement 3 for detecting positions of the boom 4 and / or the boom arms 6, 7 with respect to different angles with respect to some direction, for example, a horizontal or a vertical direction.

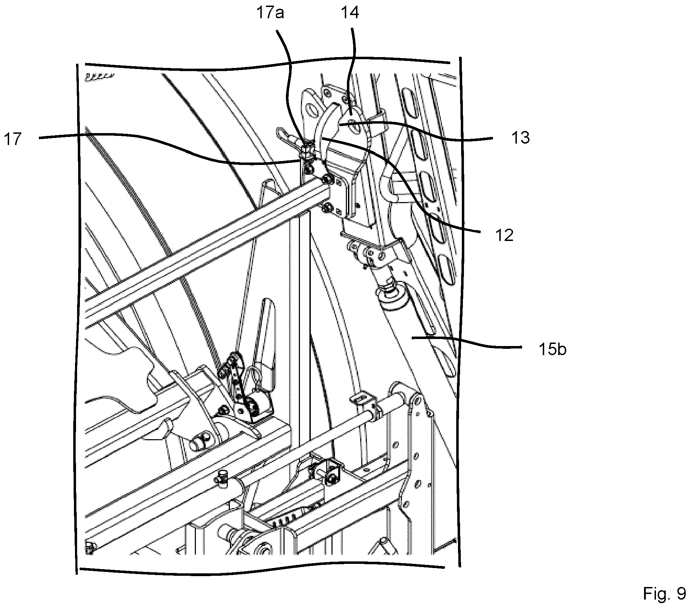

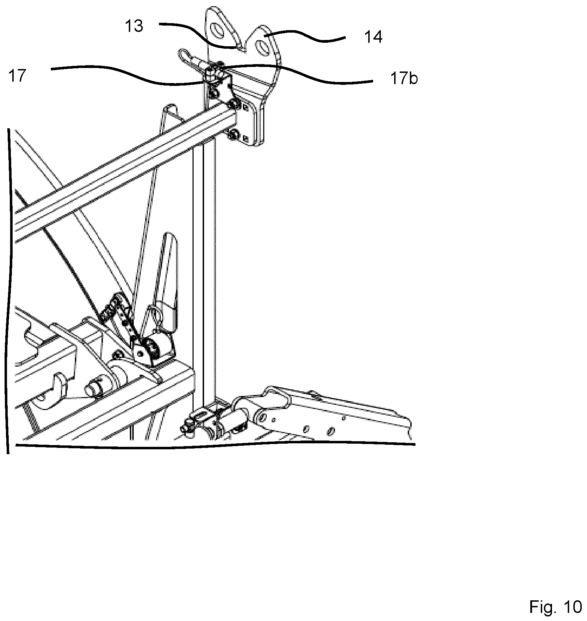

Fig. 9 and 10 show a schematic perspective representation of an arrangement with the catching plate 14 interacting with the hook 12 for boom arm locking (Fig. 9 - locked position). The locking sensor device 17 is provided with sensor elements 17a, 17b on opposite sides of the catching plate 14. Alternatively, only a single sensor element may be provided. The one or more sensor devices may detect at least one of the catching plate 14 and the hook 12. With respect to types of sensor elements, one or more sensor devices selected from the following group may be applied: a proximity switch (physical contact), a touch sensor, a mechanical button being pressed in when boom is in locked position, an inductive proximity sensor, a visual sensor and a infrared sensor which use the emittance and reflection of light to detect an object.

As part of the boom arms operating and locking mechanism 11, the actuator 15a is provided for driving movement of the boom arms 6, 7 between the locked position and the unlocked position the vertical line of movement. The actuator 15a may be applied for reaching a higher working position without exceeding the overall machine height which, for example, may be about 4m.

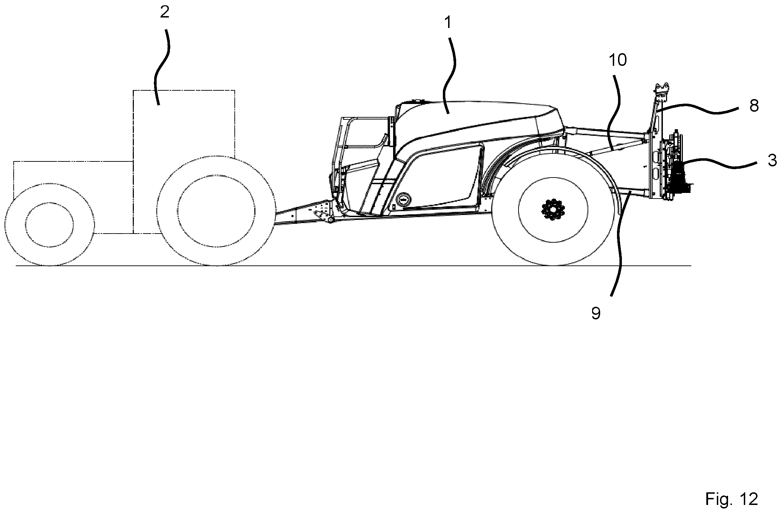

As shown in Fig. 12, the catching plate 14 can reach a rather high or elevated position. If during operation the actuator 15a is extended to a lifted position (see Fig. 8), the working / operation height can be increased without increasing overall machine height (caused by the catching plate 14).

The actuator 15a can be implemented as a plunger cylinder or a piston cylinder or a synchronous cylinder. If this cylinder is implemented as a telescopic cylinder, an even higher working position can be reached. The actuator 15a could also be provided with a pneumatic cylinder or an electric actuator.

If the actuator 15a may be equipped with one or more proximity sensors or a length measuring device, the information detected by the sensor(s) can be used by the control software to determine the exact spraying (working) height. Those sensors can be used to replace the further sensor device 18.

In an embodiment, the boom arrangement 1 may be configured to apply or conduct a folding process for one or both of the boom arms 6, 7, the process comprising: folding boom arm(s) 6, 7 to the folded position; detecting the folded position of the boom arm(s) 6, 7 by the folding sensor device; lifting the boom 4 with the boom arm(s) 6, 7 in the folded position to a locking height position by the actuator 15a providing for a boom lifting device; and locking the (folded) boom arm(s) 6, 7 after the boom 4 has been lifted to the locking height position. The locking comprises moving the boom arm(s) 6, 7 from the folded (unlocked) position to the locked position along the vertical line of movement. The locking may only be applied or allowed after sensor signals are received indicating both: (i) the boom arms 6, 7 are folded to the folded position, and (ii) the boom 4 is lifted in the locking height position. Otherwise locking of the boom arm(s) 6, 7 may be prevented by a control device (not shown) of the agricultural sprayer 1. The control device may be provided on the tractor 2 or the agricultural sprayer 1.

Sensor signals indicative of the boom 4 being lifted may be provided by one or more proximity sensors and / or a length measuring device assigned to the actuator 15a. If the sensor signals indicate that the boom 4 has not (yet) reached the locking height position locking of the boom arm(s) 6, 7 are prevented from locking.

## Claims

1. A boom arrangement (3) for an agricultural sprayer, comprising
- a boom (4) having a middle section (5) provided with a boom frame (8) and boom arms (6, 7) provided on opposite sides of the middle section (5) and vertically foldable between an unfolded working position in which the boom arms (6, 7) are at least partially unfolded and a folded position;
- a plurality of dispensing elements arranged along the boom (4) and configured to dispense a spraying material;
- a boom support assembly to which the middle section (5) of the boom (4) is connected, the boom support assembly being connectable to a support frame of an agricultural sprayer; and
- a boom arms operating and locking mechanism (11, ..., 15) configured to
- provide the boom arms (6, 7) in a locked position in which the boom arms (6, 7) are locked;
- move the boom arms (6, 7) along a vertical line of movement between the locked position and an unlocked position in which the boom arms (6, 7) can be unfolded to the unfolded working position; and
- move the boom arms (6, 7) between the unlocked position and the unfolded working position; the boom arrangement (3) being **characterized in that** it further comprises
- a locking sensor device (17) configured to detect, for the boom arms (6, 7), the locked position, and provide sensor signals indicative of the boom arms (6, 7) being in the locked position.

2. Boom arrangement (3) of claim 1, wherein the boom arms operating and locking mechanism (11, ..., 15) comprises
- a guiding device having a guiding element (13, 14) extending in the vertical direction; and
- a counter guiding element (12) assigned to the guiding element (13, 14) and configured to interact with the guiding element (13, 14) for guiding the boom arms (6, 7) for at least a partial movement of the movement along the vertical line between the locked position and the unlocked position.

3. Boom arrangement (3) of claim 2, wherein the guiding element (13, 14) comprises a guiding track (13) extending in the vertical direction, wherein the counter guiding element (12) is configured to interact with the guiding track (13) for guiding the boom arms (6, 7) for at least the partial movement of the movement along the vertical line between the locked position and the unlocked position.

4. Boom arrangement (3) of claim 3, wherein the guiding track (13) comprises a slit guiding extending in the vertical direction, wherein the counter guiding element (12) is configured to move within the slit guiding for guiding the boom arms (6, 7) for at least the partial movement of the movement along the vertical line between the locked position and the unlocked position.

5. Boom arrangement (3) of at least one of the claims 2 to 4, wherein the counter guiding element (12) is essentially positively formed with respect to the guiding element.

6. Boom arrangement (3) of at least one of the claims 2 to 5, wherein the counter guiding element (12) comprises a hook element configured to interact with the guiding element (13, 14) for guiding the boom arms (6, 7) for at least the partial movement of the movement along the vertical line between the locked position and the unlocked position.

7. Boom arrangement (3) of at least one of the preceding claims, wherein the boom arms (6, 7) are prevented from movement in a horizontal plane in the locked position in which the boom arms (6, 7) are locked.

8. Boom arrangement (3) of at least one of the preceding claims, wherein the locking sensor device (17) comprises a proximity sensor.

9. Boom arrangement (3) of at least one of the preceding claims, wherein further comprising a folding sensor device (18) configured to detect sensor signals indicative of the boom arms (6, 7) being in one of the folded position and the unfolded working position.

10. Boom arrangement (3) of at least one of the preceding claims, wherein the boom support assembly comprises a boom lifting device (9) configured to lift and lower the boom in the vertical direction for positioning the boom (4) in a plurality of positions with different height settings.

11. Boom arrangement (3) of claim 10, wherein the boom lifting device (9) comprises a parallelogram mechanism.

12. Boom arrangement (3) of claim 10 or 11, wherein the boom lifting device (9) is provided with a damping device configured to damp movement of the boom (4) in operation of the agricultural sprayer.

13. An agricultural sprayer, comprising a boom arrangement (3) of at least one of the preceding claims.

14. A method for operating an agricultural sprayer (1) having
- a boom (4) having a middle section (5) provided with a boom frame (8) and boom arms (6, 7) provided on opposite sides of the middle section (5) and vertically foldable between an unfolded working position in which the boom arms (6, 7) are at least partially unfolded and a folded position;
- a plurality of dispensing elements arranged along the boom (4) and configured to dispense a spraying material;
- a boom support assembly to which the middle section (5) of the boom (4) is connected, the boom support assembly being connectable to a support frame of an agricultural sprayer;
- a boom arms (6, 7) operating and locking mechanism (11) configured to move the boom arms (6, 7) between the unfolded working position and the folded position, and to lock the boom arms (6, 7) in the folded position; and
- a locking sensor device (17);
the method comprising:
- providing the boom arms (6, 7) in a locked position in which the boom arms (6, 7) are locked;
- detecting, for the boom arms (6, 7), the locked position by the locking sensor device (17);
- providing sensor signals indicative of the boom arms (6, 7) being in the locked position by the locking sensor device (17);
- moving the boom arms (6, 7) along a vertical line of movement between the locked position and an unlocked position in which the boom arms (6, 7) can be unfolded to the unfolded working position; and
- moving the boom arms (6, 7) between the unlocked position and the unfolded working position.

15. Method of claim 14, further comprising dispensing the dispensing material through dispensing elements from the plurality of dispensing elements, the dispensing elements provided on the boom arm, while the agricultural sprayer (1) is moving over a field and the boom arm (6) is in the unfolded working position and the other boom arm (7) provided on the opposite side of the boom frame (8) is located in one of the folded position and the locked position.

## Patentansprüche

1. Auslegeranordnung (3) für eine landwirtschaftliche Spritze, aufweisend:
- einen Ausleger (4) aufweisend einen mittleren Abschnitt (5), welcher einen Auslegerrahmen (8) aufweist, und Auslegerarme (6, 7), welche an entgegengesetzten Seiten des mittleren Abschnitts (5) bereitgestellt sind, und welche vertikal faltbar sind zwischen einer ausgeklappten Arbeitsposition, in welcher die Auslegerarme (6, 7) mindestens teilweise ausgeklappt sind, und einer eingeklappten Position;
- eine Mehrzahl von Ausgabeelementen, welche entlang des Auslegers (4) bereitgestellt sind, und welche dafür eingerichtet sind, ein Spritzmaterial auszugeben;
- eine Auslegerstützbaugruppe, mit welcher der mittlere Abschnitt (5) des Auslegers (4) verbunden ist, wobei die Auslegerstützbaugruppe mit einem Tragrahmen einer landwirtschaftlichen Spritze verbunden werden kann; und
- einen Auslegerarmbetätigungs- und -Sperrmechanismus (11, ..., 15), welcher dafür eingerichtet ist
- die Auslegerarme (6, 7) in einer gesperrten Position bereitzustellen, in welcher die Auslegerarme (6, 7) gesperrt sind;
- die Auslegerarme (6, 7) entlang einer vertikalen Bewegungslinie zwischen der gesperrten Position und einer freigegebenen Position, in welcher die Auslegerarme (6, 7) in die ausgeklappte Arbeitsposition ausgeklappt werden können, zu bewegen; und
- die Auslegerarme (6, 7) zwischen der freigegebenen Position und der ausgeklappten Arbeitsposition zu bewegen;
wobei die Auslegeranordnung (3) **dadurch gekennzeichnet ist, dass** sie ferner aufweist
- eine Sperrsensorvorrichtung (17), welcher dafür eingerichtet ist, die gesperrte Position der Auslegerarme (6, 7) zu erkennen, und Sensorsignale, welche anzeigen, dass sich die Auslegerarme (6, 7) in der gesperrten Position befinden, bereitzustellen.

2. Auslegeranordnung (3) nach Anspruch 1, wobei der Auslegerarmbetätigungs- und Sperrmechanismus (11, ..., 15) aufweist
- eine Führungsvorrichtung, welche ein Führungselement (13, 14), welches sich in der vertikalen Richtung erstreckt, aufweist; und
- ein Gegenführungselement (12), welches dem Führungselement (13, 14) zugeordnet ist, und welches dafür eingerichtet ist, mit dem Führungselement (13, 14) zusammenzuwirken, um die Auslegerarme (6, 7) mindestens für eine Teilbewegung der Bewegung entlang der vertikalen Linie zwischen der gesperrten Position und der freigegebenen Position zu führen.

3. Auslegeranordnung (3) nach Anspruch 2, wobei das Führungselement (13, 14) eine Führungsschiene (13) aufweist, welche sich in der vertikalen Richtung erstreckt, wobei das Gegenführungselement (12) dafür eingerichtet ist, mit der Führungsschiene (13) zusammenzuwirken, um die Auslegerarme (6, 7) mindestens für die Teilbewegung der Bewegung entlang der vertikalen Linie zwischen der gesperrten Position und der freigegebenen Position zu führen.

4. Auslegeranordnung (3) nach Anspruch 3, wobei die Führungsschiene (13) einen Schlitzführung aufweist, welche sich in der vertikalen Richtung erstreckt, wobei das Gegenführungselement (12) dafür eingerichtet ist, sich innerhalb der Schlitzführung zu bewegen, um die Auslegerarme (6, 7) mindestens für die Teilbewegung der Bewegung entlang der vertikalen Linie zwischen der gesperrten Position und der freigegebenen Position zu führen.

5. Auslegeranordnung (3) nach mindestens einem der Ansprüche 2 bis 4, wobei das Gegenführungselement (12) in Bezug auf das Führungselement im Wesentlichen positiv geformt ist.

6. Auslegeranordnung (3) nach mindestens einem der Ansprüche 2 bis 5, wobei das Gegenführungselement (12) ein Hakenelement aufweist, welches dafür eingerichtet ist, mit dem Führungselement (13, 14) zusammenzuwirken, um die Auslegerarme (6, 7) mindestens für die Teilbewegung der Bewegung entlang der vertikalen Linie zwischen der gesperrten Position und der freigegebenen Position zu führen.

7. Auslegeranordnung (3) nach mindestens einem der vorstehenden Ansprüche, wobei die Auslegerarme (6, 7) in der gesperrten Position, in welcher die Auslegerarme (6, 7) gesperrt sind, an einer Bewegung in einer horizontalen Ebene gehindert sind.

8. Auslegeranordnung (3) nach mindestens einem der vorstehenden Ansprüche, wobei die Sperrsensorvorrichtung (17) einen Näherungssensor aufweist.

9. Auslegeranordnung (3) nach mindestens einem der vorstehenden Ansprüche, wobei sie ferner eine Klappsensorvorrichtung (18) aufweist, welche dafür eingerichtet ist, Sensorsignale, welche anzeigen, dass sich die Auslegerarme (6, 7) entweder in der eingeklappten Position oder in der ausgeklappten Arbeitsposition befinden, zu erfassen.

10. Auslegeranordnung (3) nach mindestens einem der vorstehenden Ansprüche, wobei die Auslegerstützbaugruppe eine Auslegerhebevorrichtung (9) aufweist, welche dafür eingerichtet ist, den Ausleger in der vertikalen Richtung zu heben und zu senken, um den Ausleger (4) in einer Mehrzahl von Positionen mit unterschiedlichen Höheneinstellungen anzuordnen.

11. Auslegeranordnung (3) nach Anspruch 10, wobei die Auslegerhebevorrichtung (9) einen Parallelogramm-Mechanismus aufweist.

12. Auslegeranordnung (3) nach Anspruch 10 oder 11, wobei die Auslegerhebevorrichtung (9) eine Dämpfungsvorrichtung aufweist, welche dafür eingerichtet ist, Bewegungen des Auslegers (4) während des Betriebs der landwirtschaftlichen Spritze zu dämpfen.

13. Landwirtschaftliche Spritze, aufweisend eine Auslegeranordnung (3) nach mindestens einem der vorstehenden Ansprüche.

14. Verfahren zum Betrieb einer landwirtschaftlichen Spritze (1) aufweisend
- einen Ausleger (4) aufweisend einen mittleren Abschnitt (5), welcher einen Auslegerrahmen (8) aufweist, und Auslegerarme (6, 7), welche an entgegengesetzten Seiten des mittleren Abschnitts (5) bereitgestellt sind, und welche vertikal faltbar sind zwischen einer ausgeklappten Arbeitsposition, in welcher die Auslegerarme (6, 7) mindestens teilweise ausgeklappt sind, und einer eingeklappten Position;
- eine Mehrzahl von Ausgabeelementen, welche entlang des Auslegers (4) bereitgestellt sind, und welche dafür eingerichtet sind, ein Spritzmaterial auszugeben;
- eine Auslegerstützbaugruppe, mit welcher der mittlere Abschnitt (5) des Auslegers (4) verbunden ist, wobei die Auslegerstützbaugruppe mit einem Tragrahmen einer landwirtschaftlichen Spritze verbunden werden kann;
- einen Betätigungs- und Sperrmechanismus (11) für die Auslegerarme (6, 7), welcher dafür eingerichtet ist, die Auslegerarme (6, 7) zwischen der ausgeklappten Arbeitsposition und der eingeklappten Position zu bewegen und die Auslegerarme (6, 7) in der eingeklappten Position zu sperren; und
- eine Sperrsensorvorrichtung (17);
das Verfahren umfassend:
- Bereitstellen der Auslegerarme (6, 7) in einer gesperrten Position, in welcher die Auslegerarme (6, 7) gesperrt sind;
- Erkennen der gesperrten Position der Auslegerarme (6, 7) durch die Sperrsensorvorrichtung (17);
- Bereitstellen von Sensorsignalen, welche anzeigen, dass sich die Auslegerarme (6, 7) in der gesperrten Position befinden, durch die Sperrsensorvorrichtung (17);
- Bewegen der Auslegerarme (6, 7) entlang einer vertikalen Bewegungslinie zwischen der gesperrten Position und einer freigegebenen Position, in welcher die Auslegerarme (6, 7) in die ausgeklappte Arbeitsposition ausgeklappt werden können; und
- Bewegen der Auslegerarme (6, 7) zwischen der freigegebenen Position und der ausgeklappten Arbeitsposition.

15. Verfahren nach Anspruch 14, ferner umfassend das Ausgeben des Ausgabematerials durch Ausgabeelemente der Mehrzahl von Ausgabeelementen, wobei die Ausgabeelemente am Auslegerarm bereitgestellt sind, während sich die landwirtschaftliche Spritze (1) über ein Feld bewegt und sich der Auslegerarm (6) in der ausgeklappten Arbeitsposition befindet und sich der andere Auslegerarm (7), welcher an der entgegengesetzten Seite des Auslegerrahmens (8) angeordnet ist, entweder in der eingeklappten oder in der gesperrten Position befindet.

## Revendications

1. Agencement de flèche (3) pour pulvérisateur agricole, comprenant
- une flèche (4) ayant une section médiane (5) pourvue d'un cadre de flèche (8) et de bras de flèche (6, 7) disposés sur les côtés opposés de la section médiane (5) et repliables verticalement entre une position de travail déployée dans laquelle les bras de flèche (6, 7) sont au moins partiellement dépliés et une position repliée ;
- une pluralité d'éléments de distribution disposés le long de la flèche (4) et configurés pour distribuer une matière de pulvérisation ;
- un ensemble support de flèche auquel la section médiane (5) de la flèche (4) est reliée, l'ensemble support de flèche pouvant être relié à un châssis de support d'un pulvérisateur agricole ; et
- un mécanisme de commande et de verrouillage des bras de flèche (11, ..., 15) configuré pour
- placer les bras de flèche (6, 7) dans une position verrouillée dans laquelle les bras de flèche (6, 7) sont verrouillés ;
- déplacer les bras de flèche (6, 7) le long d'une ligne de mouvement verticale entre la position verrouillée et une position déverrouillée dans laquelle les bras de flèche (6, 7) peuvent être dépliés en position de travail dépliée ; et
- déplacer les bras de flèche (6, 7) entre la position déverrouillée et la position de travail dépliée ;
l'agencement de flèche (3) étant **caractérisé en ce qu'**il comprend en outre
- un dispositif de détection de verrouillage (17) configuré pour détecter, pour les bras de flèche (6, 7), la position verrouillée, et fournir des signaux de détection indiquant que les bras de flèche (6, 7) sont dans la position verrouillée.

2. Agencement de flèche (3) selon la revendication 1, dans lequel le mécanisme d'actionnement et de verrouillage des bras de flèche (11, ..., 15) comprend
- un dispositif de guidage ayant un élément de guidage (13, 14) s'étendant dans la direction verticale ; et
- un élément de contre-guidage (12) associé à l'élément de guidage (13, 14) et conçu pour coopérer avec l'élément de guidage (13, 14) pour guider les bras de flèche (6, 7) pour au moins un mouvement partiel du mouvement le long de la ligne verticale entre la position verrouillée et la position déverrouillée.

3. Agencement de flèche (3) selon la revendication 2, dans lequel l'élément de guidage (13, 14) comprend une piste de guidage (13) s'étendant dans la direction verticale, dans lequel l'élément de contre-guidage (12) est configuré pour coopérer avec la piste de guidage (13) pour guider les bras de flèche (6, 7) pour au moins le mouvement partiel du mouvement le long de la ligne verticale entre la position verrouillée le long et la position déverrouillée.

4. Agencement de flèche (3) selon la revendication 3, dans lequel la piste de guidage (13) comprend un guide à fente s'étendant dans la direction verticale, dans lequel l'élément de contre-guidage (12) est configuré pour se déplacer à l'intérieur du guide à fente pour les bras de flèche (6, 7) pour au moins le mouvement partiel du mouvement le long de la ligne verticale entre la position verrouillée et la position déverrouillée.

5. Agencement de flèche (3) selon au moins l'une des revendications 2 à 4, **caractérisé en ce que** l'élément de contre-guidage (12) est formé essentiellement par complémentarité de forme par rapport à l'élément de guidage.

6. Agencement de flèche (3) selon au moins l'une des revendications 2 à 5, dans lequel l'élément de contre-guidage (12) comprend un élément crochet configuré pour coopérer avec l'élément de guidage (13, 14) pour guider les bras de flèche (6, 7) pour au moins le mouvement partiel du mouvement le long de la ligne verticale entre la position verrouillée et la position déverrouillée.

7. Agencement de flèche (3) selon au moins l'une des revendications précédentes, dans lequel les bras de flèche (6, 7) sont empêchés de se déplacer dans un plan horizontal dans la position verrouillée dans laquelle les bras de flèche (6, 7) sont verrouillés.

8. Agencement de flèche (3) selon au moins l'une des revendications précédentes, dans lequel le dispositif de détection de verrouillage (17) comprend un capteur de proximité.

9. Agencement de flèche (3) selon au moins l'une des revendications précédentes, comprenant en outre un dispositif capteur de pliage (18) configuré pour détecter des signaux de capteur indiquant que les bras de flèche (6, 7) se trouvent dans l'une de la position pliée et de la position de travail dépliée.

10. Agencement de flèche (3) selon au moins l'une des revendications précédentes, dans lequel l'ensemble support de flèche comprend un dispositif de levage de flèche (9) configuré pour soulever et abaisser la flèche dans la direction verticale pour positionner la flèche (4) dans une pluralité de positions avec différents réglages de hauteur.

11. Agencement de flèche (3) selon la revendication 10, dans lequel le dispositif de levage de flèche (9) comprend un mécanisme à parallélogramme.

12. Agencement de flèche (3) selon la revendication 10 ou 11, dans lequel le dispositif de levage de flèche (9) est muni d'un dispositif d'amortissement configuré pour amortir le mouvement de la flèche (4) lors du fonctionnement du pulvérisateur agricole.

13. Pulvérisateur agricole, comprenant un agencement de flèche (3) selon au moins l'une des revendications précédentes.

14. Procédé de fonctionnement d'un pulvérisateur agricole (1) présentant
- une flèche (4) ayant une section médiane (5) pourvue d'un cadre de flèche (8) et de bras de flèche (6, 7) disposés sur les côtés opposés de la section médiane (5) et repliables verticalement entre une position de travail déployée dans laquelle les bras de flèche (6, 7) sont au moins partiellement dépliés et une position repliée ;
- une pluralité d'éléments de distribution disposés le long de la flèche (4) et configurés pour distribuer une matière de pulvérisation ;
- un ensemble support de flèche auquel est reliée la section médiane (5) de la flèche (4), l'ensemble support de flèche pouvant être relié à un bâti support d'un pulvérisateur agricole ;
- un mécanisme de commande et de verrouillage (11) des bras de flèche (6, 7) configuré pour déplacer les bras de flèche (6, 7) entre la position de travail déployée et la position repliée, et pour verrouiller les bras de flèche (6, 7) dans la position repliée ; et
- un dispositif capteur de verrouillage (17) ;
le procédé comprenant ;
- le placement des bras de flèche (6, 7) dans une position verrouillée dans laquelle les bras de flèche (6, 7) sont verrouillés ;
- la détection, pour les bras de flèche (6, 7), de la position verrouillée par le dispositif capteur de verrouillage (17) ;
- la fourniture de signaux de capteur indiquant que les bras de flèche (6, 7) sont en position verrouillée par le dispositif de capteur de verrouillage (17) ;
- le déplacement des bras de flèche (6, 7) le long d'une ligne de mouvement verticale entre la position verrouillée et une position déverrouillée dans laquelle les bras de flèche (6, 7) peuvent être dépliés en position de travail dépliée ; et
- le déplacement des bras de flèche (6, 7) entre la position déverrouillée et la position de travail dépliée.

15. Procédé selon la revendication 14, comprenant en outre la distribution de la matière de distribution par l'intermédiaire d'éléments de distribution provenant de la pluralité d'éléments de distribution, les éléments de distribution étant prévus sur le bras de flèche, tandis que le pulvérisateur agricole (1) se déplace sur un champ et que le bras de flèche (6) est dans la position de travail dépliée et l'autre bras de flèche (7) prévu sur le côté opposé du châssis de flèche (8) se trouve dans l'une des positions pliée et verrouillée.
